# EUROPÄISCHE PATENTSCHRIFT

(11) **EP 4 636 336 B1**
(45) Veröffentlichungstag und Bekanntmachung des Hinweises auf die Patenterteilung: **25.11.2026**
(21) Anmeldenummer: 25171622.1
(22) Anmeldetag: 22.04.2025
(51) Int. Cl.: F24S 50/20

(54) **VERFAHREN ZUR VERMESSUNG EINER VERSTELLBAREN SPIEGELFLÄCHE**
METHOD FOR MEASURING AN ADJUSTABLE MIRROR SURFACE
PROCÉDÉ DE MESURE D'UNE SURFACE DE MIROIR RÉGLABLE

(30) Priorität: 18.04.2024 DE 102024110927
(43) Veröffentlichungstag der Anmeldung: 22.10.2025
(73) Patentinhaber: Deutsches Zentrum für Luft- und Raumfahrt e.V., 53227 Bonn (DE)
(72) Erfinder: Röger, Marc, 74182 Obersulm (DE); Schnerring, Alexander, 51147 Köln (DE); Krauth, Julian, 51147 Köln (DE)
(74) Vertreter: dompatent

(56) Entgegenhaltungen:
- WO-A1-2022/234316
- DE-A1- 102015 217 086
- DE-A1- 102021 125 807
- US-A1- 2021 110 571

## Beschreibung

Die vorliegende Erfindung betrifft ein Verfahren zur Vermessung einer verstellbaren Spiegelfläche, vorzugsweise eines Heliostaten.

Heliostaten können beispielsweise Teil eines solarthermischen Turmkraftwerks sein. Für einen optimierten Betrieb eines derartigen solarthermischen Turmkraftwerks müssen Heliostaten kalibriert werden, um eine exakte Nachführung bzgl. der Sonne gewährleisten zu können. Unter Kalibrierung versteht man die Anpassung von Modellparametern an mehrere Kalibrierpunkte. Ein Kalibrierpunkt bezeichnet eine Messung der aktuellen Ist-Orientierung (Azimut, Elevation) des Normalenvektors auf eine Spiegelfläche eines Reflektors des Heliostaten gemeinsam mit der Soll-Orientierung. Daraus werden Korrekturwerte für eine konkrete Heliostatstellung ermittelt und abgespeichert. Diese können beispielsweise bei der Steuerung des Heliostaten verwendet werden.

Bei bekannten Turmkraftwerken wird meist eine sogenannte Kamera-Target-Methode verwendet, bei der der Reflex der Sonne eines zu kalibrierenden Heliostaten auf einen definierten Punkt auf einem weißen Target, das am Turm befestigt ist, gerichtet wird. Dabei wird ermittelt, an welcher Position der helligkeitsgemittelte Schwerpunkt (Ist-Zielpunkt) auf dem Target ist und wo er theoretisch sein sollte (Soll-Zielpunkt). Die Abweichung kann in Metern ermittelt und dann in eine Winkelabweichung aufgeteilt in den Azimut- und Elevationswinkel des Heliostatnormalenvektors umgerechnet werden. Diese Abweichung stellt einen Kalibrierpunkt dar, welcher für die Kalibrierung verwendet wird.

Aus DE 10 2021 133 719 A1 des Anmelders ist bekannt, eine Lichtquelle als einen Marker zu verwenden und dass ein Fluggerät entlang eines vorgegebenen Flugmusters bewegt wird, um eine Vielzahl von Aufnahmen der Heliostaten vorzunehmen. Aus den Aufnahmen werden anschließend mittels der in den Bildern enthaltenen Reflexionen des Markers auf den Heliostaten ein virtuelles Target bestimmt, wobei anschließend für jeden zu vermessenden Heliostaten ein Zielvektor anhand des Fokuspunktes auf dem virtuellen Target ermittelt wird.

Da eine Vielzahl von Bildern ausgewertet werden muss, um ein virtuelles Target zu bestimmen, werden die Bilder zumeist nachträglich ausgewertet, wobei das Verfahren vergleichsweise langwierig und aufwändig ist.

Bei den vorbekannten Verfahren besteht die Schwierigkeit, sogenannte Irrläufer unter den Heliostaten zu kalibrieren, die beispielsweise aufgrund eines Kommunikationsfehlers oder Fehlers im Drehgeber des Heliostaten ihren korrekten Offset verloren haben oder stehen geblieben sind, sodass diese nicht mehr der Sonne nachgeführt werden. Aufgrund der stark fehlerhaften Ausrichtung von Irrläufern ist es in den vorbekannten Verfahren oft nicht möglich, den Reflex auf das am Turm befestigte Target zu bringen oder das virtuelle Target an geeigneter Stelle zu positionieren, da hierfür eine grobe Vorkenntnis der Heliostatorientierung erforderlich ist.

Eine Schwierigkeit besteht ferner darin, einen einzelnen Irrläufer zu kalibrieren. Auch besteht bei den vorbekannten Verfahren grundsätzlich die Schwierigkeit der Kalibrierung eines einzelnen Heliostaten. Auch bei anderen Spiegelflächen, beispielsweise bei Parabolspiegeln oder linienkonzentrierenden Spiegeln besteht die Schwierigkeit einer schnellen Vermessung von Kalibrierpunkten.

Es ist daher Aufgabe der vorliegenden Erfindung, ein verbessertes Verfahren zur Vermessung einer Spiegelfläche bereitzustellen, das insbesondere für Heliostat-Irrläufer auf einfache Art und Weise die Vermessung von Kalibrierpunkten in hoher Genauigkeit ermöglicht.

US 2021/110571 A1 offenbart ein Verfahren mit den Merkmalen des Oberbegriffs des Anspruchs 1.

Die der Erfindung zugrunde liegende Aufgabenstellung wird gelöst durch Verfahren gemäß den Ansprüchen 1, 2 oder 3.

Das erfindungsgemäße Verfahren zur Vermessung einer Spiegelfläche eines Reflektors, vorzugsweise eines Reflektors eines Heliostaten eines Solarturmkraftwerks, sieht folgende Schritte vor:
a) Bereitstellen eines steuerbaren Fluggeräts, das eine Kamera aufweist, und eines stationären Markers mit vorgegebener Position, der von der Spiegelfläche des Reflektors reflektiert wird,
b) Aufnahme eines Bildes der Spiegelfläche des Reflektors mittels der Kamera an einer Position des steuerbaren Fluggeräts oberhalb des Reflektors,
c) Auswerten des Bildes und Bestimmung eines Reflexes des Markers auf der Spiegelfläche in dem Bild,
d) Abschätzen einer Position des Reflexes des Markers auf der Spiegelfläche, wobei über die abgeschätzte Position des Reflexes des Markers auf der Spiegelfläche und die Position des steuerbaren Fluggeräts ein Reflexvektor, der von der abgeschätzten Position des Reflexes des Markers auf der Spiegelfläche hin zur Kamera verläuft, abgeschätzt wird,
e) Steuern des steuerbaren Fluggeräts unter Berücksichtigung des abgeschätzten Reflexvektors zu einer neuen Position des steuerbaren Fluggeräts, die weiter von der Spiegelfläche entfernt ist als die vorangegangene Position des steuerbaren Fluggeräts,
f) Aufnahme eines Bildes der Spiegelfläche des Reflektors mittels der Kamera an der neuen Position des steuerbaren Fluggeräts,
g) Wiederholen der Schritte c) bis f) bis zum Erreichen eines Abbruchkriteriums,
h) Bestimmung des Normalenvektors der Spiegelfläche oder des Reflektors aus der Position des steuerbaren Fluggeräts, der Position des Markers sowie der letzten abgeschätzten Position des Reflexes auf der Spiegelfläche,
i) Bestimmung eines Kalibrierpunkts des Reflektors mit dem bestimmten Normalenvektor.

Durch mehrfache Wiederholung des Verfahrens können mehrere Kalibrierpunkte für einen Reflektor bestimmt werden, über die eine Kalibrierung des Reflektors durchgeführt werden kann.

Unter Kalibrierung versteht man die Anpassung von Modellparametern an mehrere Kalibrierpunkte. Für die Bestimmung eines Kalibrierpunkts wird neben der Bestimmung des Normalenvektors auch eine Soll-Orientierung des Reflektors verwendet. Daraus können während der Kalibrierung Korrekturwerte für eine konkrete Reflektorstellung ermittelt und abgespeichert werden. Diese können beispielsweise bei der Steuerung des Reflektors verwendet werden.

Die Position des steuerbaren Fluggeräts kann beispielsweise über die Steuerung des Fluggeräts oder über einen oder mehrere Sensoren, wie beispielswiese über einen GPS-Sensor, ermittelt werden. Die Position des steuerbaren Fluggeräts kann beispielsweise dem Schwerpunkt des Fluggeräts oder der Position eines Sensors entsprechen.

Da die Position der Kamera an dem steuerbaren Fluggerät bekannt oder ermittelbar ist, kann in den Schritten d) und h) die Position des steuerbaren Fluggeräts, verwendet werden und aus dieser die Position der Kamera berechnet werden. Bei großen Entfernungen von einer Spiegelfläche, wie beispielsweise 10 m und mehr, ist der Abstand der Kamera von der ermittelten Position des Fluggeräts, der im Zentimeterbereich liegt, vernachlässigbar klein, so dass auch die Position des steuerbaren Fluggeräts ohne Umrechnung verwendet werden kann.

Ein Abbruch in Schritt g) bei Erreichen eines Abbruchkriteriums muss nicht notwendigerweise erst erfolgen, wenn eine Wiederholung gemäß Schritt g) vollständig ausgeführt ist, sondern kann auch bereits nach Durchführung des Schritts e) in einer Wiederholung erfolgen.

Das Steuern des steuerbaren Fluggeräts in Schritt e) kann entlang des Reflexvektors oder parallel zu diesem erfolgen. Die neue Position des Fluggeräts muss dabei nicht notwendigerweise eine vorgegebene Position sein. Die neue Position des Fluggeräts kann sich auch durch die Abtastrate der Kamera ergeben, d.h. dass die neue Position diejenige ist, an der bei einem Flug entlang des Reflexvektors oder parallel zu diesem die Kamera das nächste Bild aufnimmt.

In einer zweiten Variante sieht das erfindungsgemäße Verfahren zur Vermessung einer Spiegelfläche eines Reflektors, vorzugsweise eines Reflektors eines Heliostaten eines Solarturmkraftwerks, folgende Schritte vor:
a) Bereitstellen eines steuerbaren Fluggeräts, das einen Marker aufweist, und einer stationären Kamera mit vorgegebener Position, die auf die Spiegelfläche des Reflektors gerichtet ist,
b) Aufnahme eines Bildes der Spiegelfläche des Reflektors mittels der Kamera, wobei das steuerbare Fluggerät an einer Position oberhalb des Reflektors angeordnet ist,
c) Auswerten des Bildes und Bestimmung eines Reflexes des Markers auf der Spiegelfläche in dem Bild,
d) Abschätzen einer Position des Reflexes des Markers auf der Spiegelfläche, wobei über die abgeschätzte Position des Reflexes des Markers auf der Spiegelfläche und die Position des steuerbaren Fluggeräts ein Reflexvektor, der von der abgeschätzten Position des Reflexes des Markers auf der Spiegelfläche hin zu dem Marker verläuft, abgeschätzt wird,
e) Steuern des steuerbaren Fluggeräts unter Berücksichtigung des abgeschätzten Reflexvektors zu einer neuen Position des steuerbaren Fluggeräts, die weiter von der Spiegelfläche entfernt ist als die vorangegangene Position des steuerbaren Fluggeräts,
f) Aufnahme eines Bildes der Spiegelfläche des Reflektors mittels der Kamera, wenn das steuerbare Fluggerät an der neuen Position angeordnet ist,
g) Wiederholen der Schritte c) bis f) bis zum Erreichen eines Abbruchkriteriums,
h) Bestimmung des Normalenvektors der Spiegelfläche oder des Reflektors aus der Position des steuerbaren Fluggeräts, der Position der Kamera sowie der letzten abgeschätzten Position des Reflexes auf der Spiegelfläche,
i) Bestimmung eines Kalibrierpunkts des Reflektors mit dem bestimmten Normalenvektor.

Durch mehrfache Wiederholung des Verfahrens können mehrere Kalibrierpunkte für einen Reflektor bestimmt werden, über die eine Kalibrierung des Reflektors durchgeführt werden kann.

Unter Kalibrierung versteht man die Anpassung von Modellparametern an mehrere Kalibrierpunkte. Für die Bestimmung eines Kalibrierpunkts wird neben der Bestimmung des Normalenvektors auch eine Soll-Orientierung des Reflektors verwendet. Daraus können während der Kalibrierung Korrekturwerte für eine konkrete Reflektorstellung ermittelt und abgespeichert werden. Diese können beispielsweise bei der Steuerung des Reflektors verwendet werden.

Die Position des steuerbaren Fluggeräts kann beispielsweise über die Steuerung des Fluggeräts oder über einen oder mehrere Sensoren, wie beispielswiese über einen GPS-Sensor, ermittelt werden. Die Position des steuerbaren Fluggeräts kann beispielsweise dem Schwerpunkt des Fluggeräts oder der Position eines Sensors entsprechen.

Da die Position des Markers an dem steuerbaren Fluggerät bekannt oder ermittelbar ist, kann in den Schritten d) und h) die Position des steuerbaren Fluggeräts, verwendet werden und aus dieser die Position der Markers berechnet werden. Bei großen Entfernungen von einer Spiegelfläche, wie beispielsweise 10 m und mehr, ist der Abstand des Markers von der ermittelten Position des Fluggeräts, der im Zentimeterbereich liegt, vernachlässigbar klein, so dass auch die Position des steuerbaren Fluggeräts ohne Umrechnung verwendet werden kann.

Ein Abbruch in Schritt g) bei Erreichen eines Abbruchkriteriums muss nicht notwendigerweise erst erfolgen, wenn eine Wiederholung gemäß Schritt g) vollständig ausgeführt ist, sondern kann auch bereits nach Durchführung des Schritts e) in einer Wiederholung erfolgen.

Das Steuern des steuerbaren Fluggeräts in Schritt e) kann entlang des Reflexvektors oder parallel zu diesem erfolgen. Die neue Position des Fluggeräts muss dabei nicht notwendigerweise eine vorgegebene Position sein. Die neue Position des Fluggeräts kann sich auch durch die Abtastrate der Kamera ergeben, d.h. dass die neue Position diejenige ist, an der bei einem Flug entlang des Reflexvektors oder parallel zu diesem die Kamera das nächste Bild aufnimmt.

In einer dritten Variante sieht das erfindungsgemäße Verfahren zur Vermessung einer Spiegelfläche eines Reflektors, vorzugswiese eines Reflektors eines Heliostaten eines Solarturmkraftwerks, mit folgenden Schritten:
a) Bereitstellen eines steuerbaren Fluggeräts, das eine Kamera und einen Marker aufweist, wobei der Marker und die Kamera jeweils mit einer vorgegebenen Position an dem steuerbaren Fluggerät angeordnet sind,
b) Aufnahme eines Bildes der Spiegelfläche des Reflektors mittels der Kamera an einer Position des steuerbaren Fluggeräts oberhalb des Reflektors,
c) Auswerten des Bildes und Bestimmung eines Reflexes des Markers auf der Spiegelfläche in dem Bild,
d) Abschätzen einer Position des Reflexes des Markers auf der Spiegelfläche, wobei über die Position des Reflexes des Markers auf der Spiegelfläche und die Position des steuerbaren Fluggeräts ein Reflexvektor, der von der abgeschätzten Position des Reflexes des Markers auf der Spiegelfläche hin zu einem vorgegebenen Punkt an dem Fluggerät verläuft, abgeschätzt wird,
e) Steuern des steuerbaren Fluggeräts unter Berücksichtigung des abgeschätzten Reflexvektors zu einer neuen Position des steuerbaren Fluggeräts, die weiter von der Spiegelfläche entfernt ist als die vorangegangene Position des steuerbaren Fluggeräts,
f) Aufnahme eines Bildes der Spiegelfläche des Reflektors mittels der Kamera an der neuen Position des steuerbaren Fluggeräts,
g) Wiederholen der Schritte c) bis f) bis zum Erreichen eines Abbruchkriteriums,
h) Bestimmung des Normalenvektors der Spiegelfläche oder des Reflektors aus der Position des steuerbaren Fluggeräts und dem vorgegebenen Punkt an dem Fluggerät sowie der letzten abgeschätzten Position des Reflexes auf der Spiegelfläche oder aus dem Reflexvektor,
i) Bestimmung eines Kalibrierpunkts des Reflektors mit dem bestimmten Normalenvektor.

Durch mehrfache Wiederholung des Verfahrens können mehrere Kalibrierpunkte für einen Reflektors bestimmt werden, über die eine Kalibrierung des Reflektors durchgeführt werden kann.

Unter Kalibrierung versteht man die Anpassung von Modellparametern an mehrere Kalibrierpunkte. Für die Bestimmung eines Kalibrierpunkts wird neben der Bestimmung des Normalenvektors auch eine Soll-Orientierung des Reflektors verwendet. Daraus können während der Kalibrierung Korrekturwerte für eine konkrete Reflektorstellung ermittelt und abgespeichert werden. Diese können beispielsweise bei der Steuerung des Reflektors verwendet werden.

Die Position des steuerbaren Fluggeräts kann beispielsweise über die Steuerung des Fluggeräts oder über einen oder mehrere Sensoren, wie beispielswiese über einen GPS-Sensor, ermittelt werden. Die Position des steuerbaren Fluggeräts kann beispielsweise dem Schwerpunkt des Fluggeräts oder der Position eines Sensors entsprechen.

Da die Position des Markers und die Position der Kamera an dem steuerbaren Fluggerät bekannt oder ermittelbar sind, kann in den Schritten d) und h) die Position des steuerbaren Fluggeräts verwendet werden und aus dieser die Position des Markers bzw. der Kamera berechnet werden. Bei großen Entfernungen von einer Spiegelfläche, wie beispielsweise 10 m und mehr, ist der Abstand der Kamera bzw. des Markers von der ermittelten Position des Fluggeräts, der im Zentimeterbereich liegt, vernachlässigbar klein, so dass auch die Position des steuerbaren Fluggeräts ohne Umrechnung als vorgegebener Punkt verwendet werden kann.

Ein Abbruch in Schritt g) bei Erreichen eines Abbruchkriteriums muss nicht notwendigerweise erst erfolgen, wenn eine Wiederholung gemäß Schritt g) vollständig ausgeführt ist, sondern kann auch bereits nach Durchführung des Schritts e) in einer Wiederholung erfolgen.

Der vorgegebenen Positionen des Markers und der Kamera an dem steuerbaren Fluggerät müssen nicht notwendigerweise fest sein. Es ist auch möglich, dass beispielsweise die Position der Kamera durch eine Verstellung veränderbar ist. Für das Verfahren ist lediglich notwendig, dass die Positionen des Markers und der Kamera bekannt sind oder ermittelt werden können.

Der Reflexvektor kann beispielsweise von der abgeschätzten Position des Reflexes des Markers auf der Spiegelfläche hin zu einem Punkt, der sich mittig zwischen Kamera und Marker befindet, verlaufen. In diesem Fall entspricht der Reflexvektor dem Normalenvektor der Spiegelfläche.

Das Steuern des steuerbaren Fluggeräts in Schritt e) kann entlang des Reflexvektors oder parallel zu diesem erfolgen. Die neue Position des Fluggeräts muss dabei nicht notwendigerweise eine vorgegebene Position sein. Die neue Position des Fluggeräts kann sich auch durch die Abtastrate der Kamera ergeben, d.h. dass die neue Position diejenige ist, an der bei einem Flug entlang des Reflexvektors oder parallel zu diesem die Kamera das nächste Bild aufnimmt.

Die unterschiedlichen Varianten der erfindungsgemäßen Verfahren unterscheiden sich darin, dass bei der ersten Variante die Kamera an dem steuerbaren Fluggerät befestigt und somit instationär ist, wohingegen der Marker stationär, beispielsweise an einem Turm eines Solarturmkraftwerks, angeordnet ist. Bei der zweiten Variante ist der Marker instationär an dem steuerbaren Fluggerät angeordnet, wohingegen die Kamera stationär, beispielsweise an dem Turm eines Solarturmkraftwerks angeordnet ist.

Die dritte Variante sieht vor, dass sowohl der Marker als auch die Kamera an dem steuerbaren Fluggerät angeordnet sind.

Das erfindungsgemäße Verfahren ermöglicht eine Kalibrierung eines Reflektors, beispielsweise eines Heliostaten, in vorteilhafter Weise, da auf einfache Art und Weise und vergleichsweise schnell ein vergleichsweise genauer Kalibrierpunkt eines einzelnen Reflektors bestimmt werden kann. Daher kann das Verfahren beispielsweise auch in vorteilhafter Weise während des Betriebs, d.h. beispielswiese während der Sonnennachführung eines Heliostaten, eingesetzt werden.

Ein zu vermessender Heliostat kann den Reflektor aufweisen, wobei dieser mindestens eine Spiegelfläche aufweist

Dem erfindungsgemäßen Verfahren liegt die Erkenntnis zu Grunde, dass, wenn sich beispielsweise die Kamera und/oder der Marker sehr nah an der Spiegelfläche des Reflektors beispielsweise eines Heliostaten befindet bzw. befinden, beispielsweise in einem Abstand von etwa 5-10 m, der durch die Spiegelfläche sichtbare Raumwinkel sehr groß ist, sodass auch bei einer sehr ungenauen Kenntnis der Reflektororientierung der Reflex des Markers leicht gefunden werden kann. Jedoch ist bei einer sehr nahen Anordnung von Marker oder Kamera eine Abschätzung des Reflexvektors bzw. des Normalenvektors nur relativ ungenau möglich.

Bei einer Entfernung der Kamera und/oder des Markers weit weg von dem Reflektor, zum Beispiel zwischen 30 m und 150 m, ist der durch die Spiegelfläche sichtbare Raumwinkel wesentlich kleiner, sodass der Reflex des Markers schwieriger aufzufinden ist. Bei einer zunehmenden Distanz vom Reflektor ist jedoch die Abschätzung des Reflexvektors bzw. des Normalenvektors deutlich genauer.

Bei dem erfindungsgemäßen Verfahren gemäß der ersten Variante wird zunächst das steuerbare Fluggerät an einer Position oberhalb des Reflektors positioniert und mittels der Kamera ein Bild der Spiegelfläche des Reflektors aufgenommen. Das Bild wird ausgewertet und der Reflex des Markers auf der Spiegelfläche in dem Bild bestimmt. Anschließend wird die Position des Reflexes des Markers auf der Spiegelfläche abgeschätzt und anhand der Position dieses Reflexes und, der Position des steuerbaren Fluggeräts der Reflexvektor abgeschätzt.

Mit dem abgeschätzten Reflexvektor wird nun das Fluggerät derart gesteuert, dass es sich weiter von der Spiegelfläche entfernt und an einer neuen Position wird ein neues Bild aufgenommen. Anhand des neuen Bildes wird dann in gleicher Weise erneut der Reflexvektor abgeschätzt.

Diese Schritte werden nun wiederholt bis zu einem vorgegebenen Abbruchkriterium, beispielsweise einer vorgegebenen Entfernung des Fluggeräts vom Reflektor.

Mittels der Position der Kamera, der Position des Markers sowie der letzten abgeschätzten Position des Reflexes auf der Spiegelfläche kann der Normalenvektor bestimmt werden und aus diesem ein Kalibrierungspunkt.

Mittels des Kalibrierungspunktes kann die Kalibrierung des Reflektors vorgenommen werden.

Das erfindungsgemäße Verfahren hat den Vorteil, dass zunächst eine Position des Fluggeräts relativ nah an dem Reflektor gewählt werden kann, um den Reflex des Markers auf der Spiegelfläche zu finden. Anschließend wird das Fluggerät weiter von dem Reflektor entfernt, wobei durch die Steuerung des Fluggeräts mittels der abgeschätzten Position des Reflexes auf der Spiegelfläche sowie des jeweils geschätzten Reflexvektors eine hohe Wahrscheinlichkeit besteht, dass auch bei einer weiter entfernten Aufnahme eines Bildes ein Reflex des Markers auf der Spiegelfläche in dem Bild bestimmt werden kann.

Gleichzeitig kann auf relativ schnelle Art und Weise ein Normalenvektor der Spiegelfläche geschätzt werden, der anhand einer Aufnahme mit einer relativ großen Entfernung von dem Reflektor ermittelt wurde, sodass eine recht hohe Genauigkeit bei der Abschätzung des Normalenvektors und somit bei der Bestimmung des Kalibrierpunktes erreicht werden kann.

In gleicher Weise ermöglicht auch die zweite Variante des erfindungsgemäßen Verfahrens, bei dem die Kamera stationär ist und der Marker mit dem steuerbaren Fluggerät bewegt wird, eine sehr genaue Abschätzung des Normalenvektors der Spiegelfläche und somit bei der Bestimmung des Kalibrierpunktes, da im Wesentlichen nur die Position von Marker und Kamera vertauscht sind.

Bei der dritten Variante werden Kamera und Marker zusammen mit dem steuerbaren Fluggerät bewegt. Diese Variante hat den besonderen Vorteil, dass keine zusätzlichen Apparaturen in dem Umfeld des Reflektors installiert werden müssen.

Die während der erfindungsgemäßen Verfahren aufgenommenen Daten können beispielsweise an eine externe Recheneinheit übertragen werden, die die Bildauswertung übernimmt und die Steuerungsdaten für die Steuerung des steuerbaren Fluggeräts gemäß Schritt e) ermittelt und an das steuerbare Fluggerät übermittelt. Die externe Recheneinheit kann beispielsweise mobil sein und als separates mobiles Gerät ausgebildet sein. Grundsätzlich kann die Recheneinheit auch an dem steuerbaren Fluggerät angeordnet sein.

Vorzugsweise ist bei den erfindungsgemäßen Verfahren vorgesehen, dass, wenn die Auswertung des Bildes in Schritt c) ergibt, dass kein Reflex des Markers in dem Bild erkennbar ist, das steuerbare Fluggerät entlang eines vorgegebenen Flugmusters gesteuert wird mit gleichzeitiger Aufnahme von Bildern mit der Kamera und Auswertung der Bilder, bis ein Reflex des Markers in einem Bild bestimmt wird, wobei vorzugsweise dann in Schritt d) dieses Bild verwendet wird. Mit anderen Worten: Wenn in Schritt c) festgestellt wird, dass kein Reflex des Markers in dem aufgenommenen Bild erkennbar ist, wird eine Suchfunktion durchgeführt, wobei das Fluggerät entlang eines vorgegebenen Flugmusters fliegt und gleichzeitig Bilder aufgenommen werden. Die Bilder werden vergleichbar mit Schritt c) ausgewertet und es wird bestimmt, ob ein Reflex des Markers in einem Bild erkennbar ist. Sobald in einem Bild ein Reflex des Markers erkennbar ist, wird die Suchfunktion abgebrochen und das Verfahren wird mit Schritt d) fortgesetzt, wobei in Schritt d) das Bild, bei dem dann der Reflex des Markers in dem Bild erkennbar war, verwendet wird. Das Flugmuster kann eine erneute Annäherung des Fluggeräts an den Reflektor umfassen.

Das vorgegebene Flugmuster kann anhand einer vorangegangenen Position oder mehrerer vorangegangener Positionen oder einer vorangegangenen Flugbahn des steuerbaren Fluggeräts erstellt werden. Im einfachsten Fall fliegt das Fluggerät zur letzten Position des steuerbaren Fluggeräts, von welcher aus ein Bild aufgenommen wurde, in dem ein Reflex des Markers auf der Spiegelfläche erkennbar war. Das vorgegebene Flugmuster kann auch anhand einer vorangegangenen abgeschätzten Position des Reflexes des Markers auf der Spiegelfläche oder mehrerer vorangegangenen abgeschätzten Positionen des Reflexes des Markers auf der Spiegelfläche erstellt werden.

Gegebenenfalls kann vorgesehen sein, dass die Steuerung des steuerbaren Fluggeräts angepasst wird, um zu verhindern, dass der Reflex des Markers auf der Spiegelfläche erneut verloren wird.

Vorzugsweise ist bei den erfindungsgemäßen Verfahren vorgesehen, dass nach Schritt a) und vor Schritt b) das steuerbare Fluggerät an einer zuvor bestimmten Startposition als Position für Schritt b) positioniert wird. Es kann somit eine Startposition des steuerbaren Fluggeräts festgelegt werden, von der aus der Schritt b) beginnt. Die Startposition kann beispielsweise eine Position sein, bei der abgeschätzt wird, dass bei einer anschließenden Aufnahme des Bildes in Schritt b) und einer Auswertung des Bildes in Schritt c) mit hoher Wahrscheinlichkeit erkannt wird, dass ein Reflex des Markers in dem Bild ist.

Beispielsweise kann die Startposition auf einer geschätzten optischen Achse des Reflektors angeordnet sein.

Es kann vorgesehen sein, dass in Schritt e) die Steuerung des steuerbaren Fluggeräts mittels Vorgabe eines Geschwindigkeitsvektors in Richtung zu der neuen Position erfolgt. Mit anderen Worten: In Schritt e) wird ein entsprechender Geschwindigkeitsvektor ermittelt und dem Fluggerät vorgegeben.

Dabei kann vorgesehen sein, dass ein Mittelpunkt der Spiegelfläche abgeschätzt wird oder vorgegeben ist, wobei die Lage des Reflexes des Markers auf der Spiegelfläche zu dem abgeschätzten oder vorgegebenen Mittelpunkt ermittelt wird und bei der Vorgabe des Geschwindigkeitsvektors berücksichtigt wird. Bei einem Reflektor mit mehreren Spiegelflächen kann auch der Mittelpunkt des Reflektors abgeschätzt bzw. vorgegeben und verwendet werden. Mit anderen Worten: Bei der Ermittlung des Geschwindigkeitsvektors können Komponenten des Geschwindigkeitsvektors so gelegt werden, dass der von der Kamera beobachtete Reflex des Markers auf der Spiegelfläche in Richtung zu dem Mittelpunkt der Spiegelfläche oder des Reflektors "wandert" bzw. in dessen Nähe verbleibt. Für die Ermittlung des Geschwindigkeitsvektors kann beispielsweise eine relative Position des Reflexes des Markers auf der Spiegelfläche zu dem Mittelpunkt oder einem anderen Punkt in dem aufgenommenen Bild in Pixeln als Pixelabstand (Abstand in Pixeln in dem Bild) bestimmt werden.

Da beispielsweise ein Abstand des Reflexes des Markers auf der Spiegelfläche zu einem Mittelpunkt in Pixeln in Abhängigkeit von der Größe des Bildausschnitts und somit in Abhängigkeit von der Entfernung des Fluggeräts variiert, kann der Pixelabstand normiert werden. Für die Normierung kann eine Struktur bekannter Länge in dem Bild bestimmt werden, die Pixelanzahl der Länge der Struktur bestimmt werden und die bestimmte Pixelanzahl für die Normierung des Pixelabstands verwendet werden. Dadurch wird ein von der Auflösung des Bildes unabhängiger Abstand ermittelt.

Als Struktur bekannter Länge kann beispielsweise ein Außenrand der Spiegelfläche oder des Reflektors verwendet werden.

Es kann auch vorgesehen sein, dass in Schritt e) die Steuerung des steuerbaren Fluggeräts durch Vorgabe eines neuen Wegpunktes an der neuen Position mittels Vorgabe einer Fluggeschwindigkeit erfolgt. Auch bei der Variante, die die Vorgabe eines neues Wegpunktes vorsieht, kann ein Mittelpunkt der Spiegelfläche abgeschätzt werden oder vorgegeben sein und der neue Wegpunkt in Bezug auf den Mittelpunkt festgelegt werden. Dabei kann der Wegpunkt auch anhand des zuvor beschriebenen normierten Pixelabstands festgelegt werden.

Die Geschwindigkeitsvektorkomponenten des Geschwindigkeitsvektors, die orthogonal zu dem Reflexvektor liegen, können in einer Navigationsebene angeordnet sein, die orthogonal zu dem Reflexvektor angeordnet ist. Über diese Geschwindigkeitsvektorkomponenten kann erreicht werden, dass der von der Kamera beobachtete Reflex des Markers auf der Spiegelfläche z.B. in Richtung zu dem Mittelpunkt der Spiegelfläche oder des Reflektors "wandert" bzw. in dessen Nähe verbleibt, Auch ein vorgegebener Wegpunkt kann in Bezug zu einer derartigen Ebene definiert sein. Dadurch kann eine Steuerung des Fluggeräts auf einfache Art und Weise erfolgen, da die Vorgaben für die Steuerung in einer für das Fluggerät auf einfache Art und Weise umsetzbarer Form vorliegen.

Vorzugsweise ist vorgesehen, dass, wenn in Schritt c) in dem Bild mehrere Reflexe des Markers auf der Spiegelfläche des Reflektors oder auf mehreren Spiegelflächen des Reflektors bestimmt werden, in Schritt d) die Positionen der mehreren Reflexe des Markers abgeschätzt werden und eine Zusammenfassung der abgeschätzten Positionen der mehreren Reflexe des Markers erfolgt, vorzugsweise eine Mittelung der abgeschätzten Positionen, wobei anschließend für die Abschätzung des Reflexvektors oder des Normalenvektors der Spiegelfläche die zusammengefasste Position als Position des Reflexes des Markers verwendet wird.

Da aus der Position des Reflexes auf der Spiegelfläche der Reflexvektor abgeschätzt wird und der abgeschätzte Reflexvektor oder der abgeschätzte Normalenvektor bei der Steuerung des steuerbaren Fluggeräts berücksichtigt wird, hat die Mittelung den Vorteil, dass lediglich ein Signal für die weiteren Schritte verwendet wird. Die Mittelung kann beispielsweise als arithmetische Mittelung der abgeschätzten Positionen der mehreren Reflexe des Markers erfolgen.

Beispielsweise bei Reflektoren mit mehreren Spiegelflächen, wie beispielswiese bei Heliostaten, sind die Spiegelflächen häufig leicht zueinander angestellt, um eine Konzentration der Strahlung zu erreichen. Dadurch kann auf den verschiedenen Spiegelflächen gleichzeitig jeweils ein Reflex sichtbar sein. Durch die Mittelung der abgeschätzten Position dieser Reflexe wird somit eine in Bezug auf den gesamten Reflektor abgeschätzte Position als Startpunkt für den Reflexvektor abgeschätzt.

Der Marker kann beispielsweise ein Gegenstand mit einem Muster oder einer charakteristischen Form sein. Besonders bevorzugt weist der Marker eine oder mehrere Lichtquellen auf.

Das Verfahren kann nachts oder zu einem Zeitpunkt mit geringer Sonnenstrahlung durchgeführt werden, da dann die Reflexe des Markers in vorteilhafter Weise auf der Spiegelfläche erkennbar sind, ohne dass diese durch Reflexe der Sonne beeinträchtigt werden könnten. Um sicherzustellen, dass die Position des Reflexes auf der Spiegelfläche in vorteilhafter Weise bestimmt werden kann, kann bei geringen Lichtverhältnissen oder nachts auch vorgesehen sein, dass die Spiegelfläche beleuchtet wird oder zumindest an Ecken der Spiegelfläche leuchtende Markierungen angeordnet sind, um die Spiegelfläche in dem Bild zu erkennen.

Das erfindungsgemäße Verfahren kann beispielsweise auch während des Betriebs eines Kraftwerks, dessen Teil der Reflektor ist, durchgeführt werden.

Die Steuerung des steuerbaren Fluggeräts gemäß Schritt e) erfolgt unter Berücksichtigung des abgeschätzten Reflexvektors oder des abgeschätzten Normalenvektors. Dies muss nicht notwendigerweise bedeuten, dass die Flugroute des Fluggeräts exakt entlang des abgeschätzten Reflexvektors oder des abgeschätzten Normalenvektors oder parallel zu diesem erfolgt. Grundsätzlich kann auch eine Korrektur erfolgen, um beispielsweise sicherzugehen, dass der Reflex des Markers bei dem anschließenden Bild nicht verloren geht.

Das erfindungsgemäße Verfahren hat den besonderen Vorteil, dass ein Kalibrierpunkt eines Reflektors "on-the-fly" ermittelt werden kann, das heißt, dass keine vorherige Flugplanung erfolgen muss. Dadurch ist eine besonders schnelle und zeiteffiziente Ermittlung eines Kalibrierpunktes möglich. Der so ermittelte Kalibrierpunkt kann beispielsweise zur initialen Kalibrierung bei Inbetriebnahme oder zur Rekalibrierung nach einer gewissen Betriebsdauer verwendet werden.

Bei den Varianten, bei denen die Kamera an dem Fluggerät angeordnet ist, kann die Kamera verschwenkbar an dem Fluggerät befestigt sein. Dabei kann vorgesehen sein, dass die Kamera anhand des Reflexvektors ausgerichtet wird, d.h., dass eine optische Achse der Kamera dem Reflexvektor entspricht. Dadurch wird sichergestellt, dass der Reflex und die aufgenommene Spiegelfläche sich im Bereich der Bildmitte befinden.

Mittels des erfindungsgemäßen Verfahrens können sehr hohe Genauigkeiten des Kalibrierpunktes erreicht, sodass eine Kalibrierung beispielsweise im Bereich der sogenannten Feinkalibrierung (Größenordnung 0,3 bis 1 mrad) möglich ist.

Für eine genaue Berechnung des Reflexvektors wird eine genaue Position des Reflexes des Markers auf der Spiegelfläche benötigt, d.h. eine genaue Position des Reflexes im Raum. Dies erfordert neben der Position des Reflexes im Bild auch Kenntnis über die Orientierung der Spiegelfläche: Eine Rotation der Spiegelfläche sorgt aufgrund des Hebels für eine Translation der Position des Reflexes. Problematisch ist, dass die Orientierung der Spiegelfläche nicht immer genau bekannt oder bestimmbar ist, wodurch auch die genaue Position des Reflexes nicht bekannt ist. Daher wird gemäß den erfindungsgemäßen Verfahren die Position des Reflexes auf der Spiegelfläche bzw. im Raum abgeschätzt. Die Abschätzung kann auf verschiedene Weisen erfolgen:
Beispielsweise kann als Näherung der Position des Reflexes ein bekannter Punkt verwendet werden, beispielsweise der Schnittpunkt der Rotationsachsen eines Reflektors, der zumeist der Mittelpunkt des Reflektors ist, oder ein anderer Punkt, der nah genug an der Position des Reflexes liegt. Im Bild kann beispielsweise über einen Pixelabstand oder einen normierten Pixelabstand bestimmt werden, ob der Position des Reflexes ausreichend nah an dem bekannten Punkt liegt, um diesen als Näherung der Position des Reflexes bei der Abschätzung zu verwenden.

Auch besteht die Möglichkeit eine Schätzung der Orientierung der Spiegelfläche vorzunehmen, die auch initial sein kann. Beispielsweise kann die Orientierung der Spiegelfläche über einen initialen Normalenvektor erfolgen, aus der die Position des Reflexes im Raum abgeschätzt werden kann. Alternativ kann die Orientierung der Spiegelfläche aus dem Bild abgeschätzt werden.

Bei dem erfindungsgemäßen Verfahren ist es nicht unbedingt notwendig, dass die Ausrichtung des Reflektors vorher bekannt ist, da beispielsweise über die beschriebene Suchfunktion solange geflogen werden kann, bis ein Reflex des Markers in dem aufgenommenen Bild erkennbar ist und anschließend die weiteren Verfahrensschritte durchgeführt werden können.

Die erfindungsgemäßen Verfahren ermöglichen in vorteilhafter Weise, dass beispielsweise für Heliostat-Irrläufer in einem Heliostatenfeld eines Solarturmkraftwerks auf einfache Art und Weise Kalibrierpunkte ermittelt werden, so dass diese einzeln mittels des erfindungsgemäßen Verfahrens kalibriert werden können. Ein Irrläufer in einem Heliostatenfeld kann beispielsweise über eine Bildaufnahme des gesamten oder eines Teils des Heliostatenfeldes ermittelt werden.

Im Folgenden wird die Erfindung unter Bezugnahme auf die nachfolgenden Figuren näher erläutert. Es zeigen:
- Fig. 1: eine schematische Darstellung des steuerbaren Fluggeräts mit Kamera und des Markers für die erste Variante des erfindungsgemäßen Verfahrens,
- Fig. 2: eine schematische Darstellung des steuerbaren Fluggeräts mit Marker und der Kamera für die zweite Variante des erfindungsgemäßen Verfahrens und
- Fig. 3: eine schematische Darstellung des steuerbaren Fluggeräts mit daran angeordnetem Marker und Kamera für die dritte Variante des erfindungsgemäßen Verfahrens.

Gemäß einer ersten Variante des erfindungsgemäßen Verfahrens wird ein Heliostat 1 mit einem Reflektor 3, der eine Spiegelfläche 5 bildet, mittels einer Kamera 9, die an einem steuerbaren Fluggerät 7 angeordnet ist, aufgenommen. Ein stationär angeordneter Marker 11, der beispielsweise eine Lichtquelle sein kann, erzeugt einen Reflex 13 auf der Spiegelfläche 5. Die mittels der Kamera 9 aufgenommenen Bilder werden an eine externe Recheneinheit 15 übermittelt und ausgewertet. Anhand der Position des Reflexes 13 des Markers 11 auf der Spiegelfläche 5, der Position des steuerbaren Fluggeräts 7 und der Position des Markers 11 wird ein Reflexvektor 16 abgeschätzt, der von der abgeschätzten Position des Reflexes des Markers 11 auf der Spiegelfläche 5 hin zur Kamera 9 verläuft.

Der Reflexvektor 16 wird nun verwendet, um das steuerbare Fluggerät 7 zu einer neuen Position, die weiter entfernt von dem Heliostaten 1 ist, zu bewegen, wie durch den Pfeil angedeutet ist. Anschließend wird erneut ein Bild der Spiegelfläche 5 des Heliostaten 1 aufgenommen und ausgewertet für eine erneute Abschätzung des Reflexvektors 16. Diese Schritte werden bis zu einem Abbruchkriterium, das beispielsweise eine vorgegebene Entfernung des steuerbaren Fluggeräts 7 von dem Heliostaten 1 sein kann, durchgeführt.

Anschließend wird an der letzten Position der Normalenvektor 17 der Spiegelfläche 5 aus der letzten Position des steuerbaren Fluggeräts 7, der Position des Markers 11 sowie der letzten abgeschätzten Position des Reflexes 13 auf der Spiegelfläche 5 bestimmt.

Schließlich wird mit der Normalenvektor 17 gemeinsam mit einem Soll-Normalenvektor als Kalibrierpunkt abgespeichert, der zur Kalibrierung des Heliostaten 1 verwendet wird.

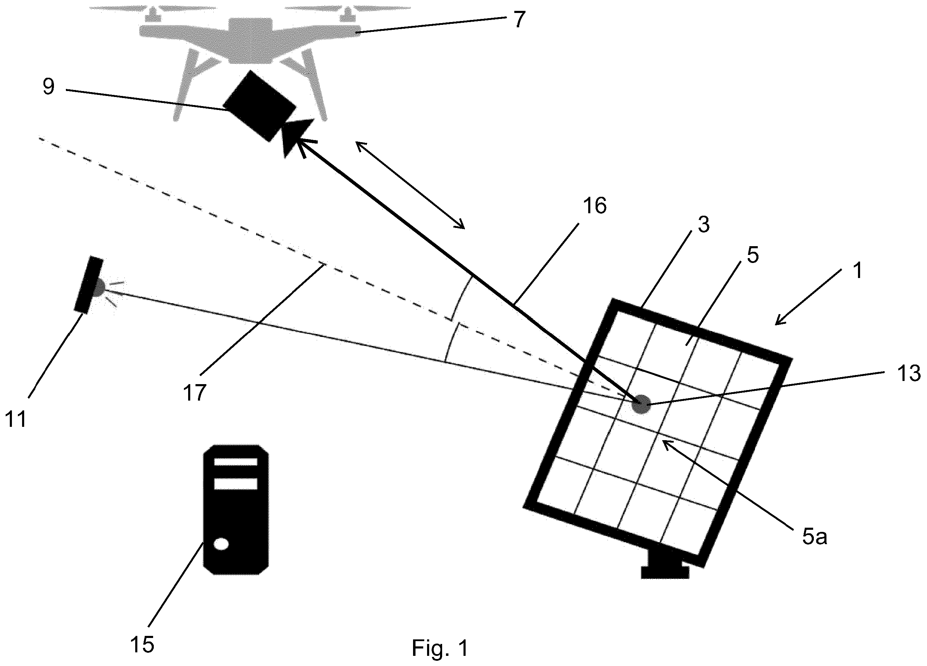

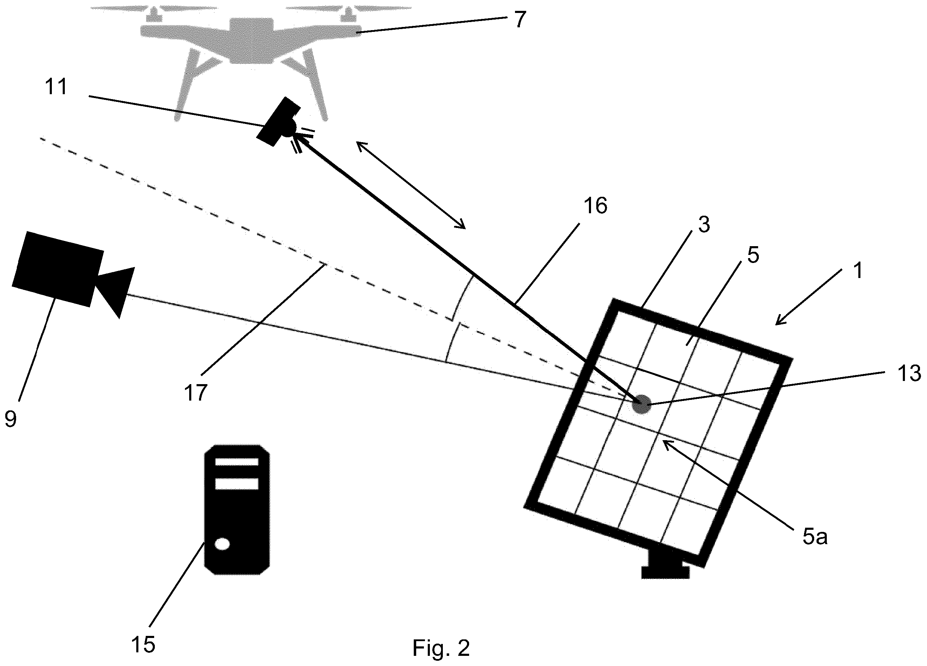

In Fig. 2 ist die zweite Variante des erfindungsgemäßen Verfahrens schematisch dargestellt. Bei der zweiten Variante des erfindungsgemäßen Verfahrens sind Kamera 9 und Marker 11 gegenüber der ersten Variante getauscht sind, sodass die Kamera 9 stationär angeordnet ist wohingegen der Marker 11 an dem steuerbaren Fluggerät 7 befestigt ist. Im Übrigen entspricht die Fig. 2 der Fig. 1 und es wird auf die diesbezügliche Beschreibung verwiesen.

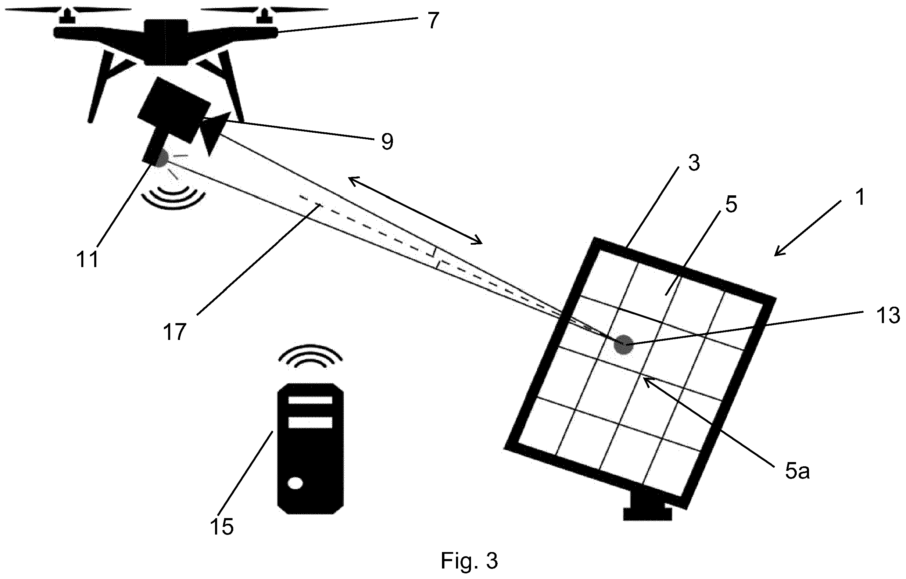

In Fig. 3 ist die Anordnung von Kamera 9 und Marker 11 für eine dritte Variante des erfindungsgemäßen Verfahrens dargestellt.

Bei diesem Ausführungsbeispiel sind sowohl die Kamera 9 als auch der Marker 11 an einer mit einer vorgegebenen Position an dem steuerbaren Fluggerät 7 angeordnet.

Bei der Steuerung des steuerbaren Fluggeräts 7 kann grundsätzlich vorgesehen sein, dass die Steuerung so erfolgt, dass der Reflex 13 des Markers 11 auf der Spiegelfläche 5 in Richtung eines Mittelpunktes 5a der Spiegelfläche 5 "wandert". Dazu kann bei der Bildauswertung die Lage der Spiegelfläche 5 und der Mittelpunkt 5a aus den Bildern abgeschätzt werden.

### Bezugszeichenliste

- 1: Heliostat
- 3: Reflektor
- 5: Spiegelfläche
- 5a: Mittelpunkt
- 7: steuerbares Fluggerät
- 9: Kamera
- 11: Marker
- 13: Reflex
- 15: externe Recheneinheit
- 16: Reflexvektor
- 17: Normalenvektor

## Patentansprüche

1. Verfahren zur Vermessung einer Spiegelfläche (5) eines Reflektors (3), vorzugsweise eines Reflektors (5) eines Heliostaten (1) eines Solarturmkraftwerks, mit folgenden Schritten:
a) Bereitstellen eines steuerbaren Fluggeräts (7), das eine Kamera (9) aufweist, und eines stationären Markers (11) mit vorgegebener Position, der von der Spiegelfläche (5) des Reflektors (3) reflektiert wird,
b) Aufnahme eines Bildes der Spiegelfläche (5) des Reflektors (3) mittels der Kamera (9) an einer Position des steuerbaren Fluggeräts (7) oberhalb des Reflektors (3),
c) Auswerten des Bildes und Bestimmung eines Reflexes (13) des Markers (11) auf der Spiegelfläche (5) in dem Bild,
d) Abschätzen einer Position des Reflexes (13) des Markers (11) auf der Spiegelfläche (5), wobei über die abgeschätzte Position des Reflexes (13) des Markers (11) auf der Spiegelfläche (5) und die Position des steuerbaren Fluggeräts (7) ein Reflexvektor (16), der von der abgeschätzten Position des Reflexes des Markers (11) auf der Spiegelfläche (5) hin zur Kamera (9) verläuft, abgeschätzt wird, **dadurch gekennzeichnet, dass** das Verfahren folgende Schritte umfasst:
e) Steuern des steuerbaren Fluggeräts (7) unter Berücksichtigung des abgeschätzten Reflexvektors (16) zu einer neuen Position des steuerbaren Fluggeräts (7), die weiter von der Spiegelfläche (5) entfernt ist als die vorangegangene Position des steuerbaren Fluggeräts (7),
f) Aufnahme eines Bildes der Spiegelfläche (5) des Reflektors (3) mittels der Kamera (9) an der neuen Position des steuerbaren Fluggeräts (7),
g) Wiederholen der Schritte c) bis f) bis zum Erreichen eines Abbruchkriteriums,
h) Bestimmung des Normalenvektors (17) der Spiegelfläche (5) oder des Reflektors (3) aus der Position des steuerbaren Fluggeräts (7), der Position des Markers (1) sowie der letzten abgeschätzten Position des Reflexes (13) auf der Spiegelfläche (15),
i) Bestimmung eines Kalibrierpunkts des Reflektors (3) mit dem bestimmten Normalenvektor (17).

2. Verfahren zur Vermessung einer Spiegelfläche (5) eines Reflektors (3), vorzugsweise eines Reflektors (3) eines Heliostaten (1) eines Solarturmkraftwerks, mit folgenden Schritten:
a) Bereitstellen eines steuerbaren Fluggeräts (7), das einen Marker aufweist, und einer stationären Kamera (9) mit vorgegebener Position, die auf die Spiegelfläche (5) des Reflektors (3) gerichtet ist,
b) Aufnahme eines Bildes der Spiegelfläche (5) des Reflektors (3) mittels der Kamera (9), wobei das steuerbare Fluggerät (7) an einer Position oberhalb des Reflektors (3) angeordnet ist,
c) Auswerten des Bildes und Bestimmung eines Reflexes (13) des Markers (11) auf der Spiegelfläche (5) in dem Bild,
d) Abschätzen einer Position des Reflexes (13) des Markers (11) auf der Spiegelfläche (5), wobei über die abgeschätzte Position des Reflexes (13) des Markers (11) auf der Spiegelfläche (5) und die Position des steuerbaren Fluggeräts (7) ein Reflexvektor (16) , der von der abgeschätzten Position des Reflexes (13) des Markers (11) auf der Spiegelfläche (5) hin zu dem Marker (11) verläuft, abgeschätzt wird,
e) Steuern des steuerbaren Fluggeräts (7) unter Berücksichtigung des abgeschätzten Reflexvektors (16) zu einer neuen Position des steuerbaren Fluggeräts (7), die weiter von der Spiegelfläche (5) entfernt ist als die vorangegangene Position des steuerbaren Fluggeräts (7),
f) Aufnahme eines Bildes der Spiegelfläche (5) des Reflektors (3) mittels der Kamera (9), wenn das steuerbare Fluggerät an der neuen Position angeordnet ist,
g) Wiederholen der Schritte c) bis f) bis zum Erreichen eines Abbruchkriteriums,
h) Bestimmung des Normalenvektors (17) der Spiegelfläche (5) oder des Reflektors (3) aus der Position des steuerbaren Fluggeräts (7), der Position der Kamera sowie der letzten abgeschätzten Position des Reflexes auf der Spiegelfläche,
i) Bestimmung eines Kalibrierpunkts des Reflektors (3) mit dem bestimmten Normalenvektor (17).

3. Verfahren zur Vermessung einer Spiegelfläche (5) eines Reflektors (3), vorzugswiese eines Reflektors (3) eines Heliostaten (1) eines Solarturmkraftwerks, mit folgenden Schritten:
a) Bereitstellen eines steuerbaren Fluggeräts (7), das eine Kamera (9) und einen Marker (11) aufweist, wobei der Marker und die Kamera (9) jeweils mit einer vorgegebenen Position an dem steuerbaren Fluggerät angeordnet sind,
b) Aufnahme eines Bildes der Spiegelfläche (5) des Reflektors (3) mittels der Kamera (9) an einer Position des steuerbaren Fluggeräts (7) oberhalb des Reflektors (3),
c) Auswerten des Bildes und Bestimmung eines Reflexes (13) des Markers (11) auf der Spiegelfläche (5) in dem Bild,
d) Abschätzen einer Position des Reflexes (13) des Markers (11) auf der Spiegelfläche (5), wobei über die Position des Reflexes (13) des Markers (11) auf der Spiegelfläche (5), und die Position des steuerbaren Fluggeräts (7) ein Reflexvektor (16), der von der abgeschätzten Position des Reflexes (13) des Markers (11) auf der Spiegelfläche (5) hin zu einem vorgegebenen Punkt an dem Fluggerät (7) verläuft, abgeschätzt wird,
e) Steuern des steuerbaren Fluggeräts (7) unter Berücksichtigung des abgeschätzten Reflexvektors (16) zu einer neuen Position des steuerbaren Fluggeräts (7), die weiter von der Spiegelfläche (5) entfernt ist als die vorangegangene Position des steuerbaren Fluggeräts (7),
f) Aufnahme eines Bildes der Spiegelfläche (5) des Reflektors (3) mittels der Kamera an der neuen Position des steuerbaren Fluggeräts (7),
g) Wiederholen der Schritte c) bis f) bis zum Erreichen eines Abbruchkriteriums,
h) Bestimmung des Normalenvektors (17) der Spiegelfläche (5) oder des Reflektors (3) aus der Position des steuerbaren Fluggeräts (7) und dem vorgegebenen Punkt an dem Fluggerät (7) sowie der letzten abgeschätzten Position des Reflexes (13) auf der Spiegelfläche (5) oder aus dem Reflexvektor (16),
i) Bestimmung eines Kalibrierpunkts des Reflektors (3) mit dem bestimmten Normalenvektor (17).

4. Verfahren nach Anspruch 1, 2 oder 3, **dadurch gekennzeichnet, dass** wenn die Auswertung des Bildes in Schritt c) ergibt, dass kein Reflex (13) des Markers (11) in dem Bild erkennbar ist, das steuerbare Fluggerät entlang eines vorgegebenen Flugmusters gesteuert wird mit gleichzeitiger Aufnahme von Bildern mit der Kamera und Auswertung der Bilder bis ein Reflex (13) des Markers (11) in einem Bild bestimmt wird, wobei vorzugsweise dann in Schritt d) dieses Bild verwendet wird.

5. Verfahren nach Anspruch 4, **dadurch gekennzeichnet, dass** das vorgegebene Flugmuster anhand einer vorangegangenen Position oder mehrerer vorangegangenen Positionen oder einer vorangegangenen Flugbahn des steuerbaren Fluggeräts (7) erstellt wird.

6. Verfahren nach einem der Ansprüche 1 bis 5, **dadurch gekennzeichnet, dass** nach Schritt a) und vor Schritt b) das steuerbare Fluggerät an einer zuvor bestimmten Startposition als Position für Schritt b) positioniert wird.

7. Verfahren nach Anspruch 6, **dadurch gekennzeichnet, dass** die Startposition auf einer geschätzten optischen Achse des Reflektors (3) angeordnet ist.

8. Verfahren nach einem der Ansprüche 1 bis 7, **dadurch gekennzeichnet, dass** in Schritt e) die Steuerung des steuerbaren Fluggeräts (7) mittels Vorgabe eines Geschwindigkeitsvektors in Richtung zu der neuen Position erfolgt.

9. Verfahren nach Anspruch 8, **dadurch gekennzeichnet, dass** ein Mittelpunkt (5a) der Spiegelfläche (5) oder des Reflektors (3) abgeschätzt wird, wobei die Lage des Reflexes (13) des Markers (11) auf der Spiegelfläche (5) zu dem abgeschätzten Mittelpunkt (5a) ermittelt wird und bei der Vorgabe des Geschwindigkeitsvektors berücksichtigt wird.

10. Verfahren nach einem der Ansprüche 1 bis 7, **dadurch gekennzeichnet, dass** in Schritt e) die Steuerung des steuerbaren Fluggeräts (7) durch Vorgabe eines neuen Wegpunktes an der neuen Position und mittels Vorgabe einer Fluggeschwindigkeit erfolgt.

11. Verfahren nach einem der Ansprüche 1 bis 10, **dadurch gekennzeichnet, dass** wenn in Schritt c) in dem Bild mehrere Reflexe des Markers (11) auf der Spiegelfläche (5) des Reflektors (3) oder mehreren Spiegelflächen (5) des Reflektors (3) bestimmt werden, in Schritt d) die Positionen der mehreren Reflexe des Markers (11) abgeschätzt werden und eine Zusammenfassung der abgeschätzten Positionen erfolgt, wobei anschließend für die Abschätzung des Reflexvektors (16) oder des Normalenvektors (17) der Spiegelfläche (5) oder des Reflektors (3) die zusammengefasste Position als Position des Reflexes (13) des Markers (11) verwendet wird.

## Claims

1. A method for measuring a mirror surface (5) of a reflector (3), preferably of a reflector (3) of a heliostat (1) in a solar tower power plant, comprising the following steps:
a) providing a controllable flying apparatus (7) comprising a camera (9), and a stationary marker (11) with a predetermined position, which is reflected by the mirror surface (5) of the reflector (3),
b) capturing an image of the mirror surface (5) of the reflector (3) using the camera (9) at a position of the controllable flying apparatus (7) above the reflector (3),
c) evaluating the image and determining a reflection (13) of the marker (11) on the mirror surface (5) in the image,
d) estimating a position of the reflection (13) of the marker (11) on the mirror surface (5), wherein, based on the estimated position of the reflection (13) of the marker (11) on the mirror surface (5) and the position of the controllable flying apparatus (7), a reflection vector (16) is estimated, which extends from the estimated position of the reflection of the marker (11) on the mirror surface (5) toward the camera (9),
**characterized in that** the method comprises the following steps:
e) controlling the controllable flying apparatus (7), by taking into account the estimated reflection vector (16), to a new position of the controllable flying apparatus (7), which is farther from the mirror surface (5) than the previous position of the controllable flying apparatus (7),
f) capturing an image of the mirror surface (5) of the reflector (3) using the camera (9) at the new position of the controllable flying apparatus (7),
g) repeating steps c) through f) until a stop criterion is met,
h) determining the normal vector (17) of the mirror surface (5) or the reflector (3) from the position of the controllable flying apparatus (7), the position of the marker (11), and the last estimated position of the reflection (13) on the mirror surface (5),
i) determining a calibration point of the reflector (3) using the determined normal vector (17).

2. The method for measuring a mirror surface (5) of a reflector (3), preferably of a reflector (3) of a heliostat (1) in a solar tower power plant, comprising the following steps:
a) providing a controllable flying apparatus (7) comprising a marker, and a stationary camera (9) with a predetermined position, which is directed toward the mirror surface (5) of the reflector (3),
b) capturing an image of the mirror surface (5) of the reflector (3) using the camera (9), wherein the controllable flying apparatus (7) is disposed at a position above the reflector (3),
c) evaluating the image and determining a reflection (13) of the marker (11) on the mirror surface (5) in the image,
d) estimating a position of the reflection (13) of the marker (11) on the mirror surface (5), wherein, based on the estimated position of the reflection (13) of the marker (11) on the mirror surface (5) and the position of the controllable flying apparatus (7), a reflection vector (16) is estimated, which extends from the estimated position of the reflection (13) of the marker (11) on the mirror surface (5) toward the marker (11),
e) controlling the controllable flying apparatus (7), by taking into account the estimated reflection vector (16), to a new position of the controllable flying apparatus (7), which is farther from the mirror surface (5) than the previous position of the controllable flying apparatus (7),
f) capturing an image of the mirror surface (5) of the reflector (3) using the camera (9) once the controllable flying apparatus is disposed at the new position,
g) repeating steps c) through f) until a stop criterion is met,
h) determining the normal vector (17) of the mirror surface (5) or the reflector (3) from the position of the controllable flying apparatus (7), the position of the camera, and the last estimated position of the reflection on the mirror surface,
i) determining a calibration point of the reflector (3) using the determined normal vector (17).

3. The method for measuring a mirror surface (5) of a reflector (3), preferably of a reflector (3) of a heliostat (1) in a solar tower power plant, comprising the following steps:
a) providing a controllable flying apparatus (7) that comprises a camera (9) and a marker (11), wherein the marker and the camera (9) are each disposed with a predetermined position on the controllable flying apparatus,
b) capturing an image of the mirror surface (5) of the reflector (3) using the camera (9) at a position of the controllable flying apparatus (7) above the reflector (3),
c) evaluating the image and determining a reflection (13) of the marker (11) on the mirror surface (5) in the image,
d) estimating a position of the reflection (13) of the marker (11) on the mirror surface (5), wherein, based on the position of the reflection (13) of the marker (11) on the mirror surface (5) and the position of the controllable flying apparatus (7), a reflection vector (16) is estimated, which extends from the estimated position of the reflection (13) of the marker (11) on the mirror surface (5) toward a predetermined point on the flying apparatus (7),
e) controlling the controllable flying apparatus (7), by taking into account the estimated reflection vector (16), to a new position of the controllable flying apparatus (7), which is farther from the mirror surface (5) than the previous position of the controllable flying apparatus (7),
f) capturing an image of the mirror surface (5) of the reflector (3) using the camera at the new position of the controllable flying apparatus (7),
g) repeating steps c) through f) until a stop criterion is met,
h) determining the normal vector (17) of the mirror surface (5) or the reflector (3) from the position of the controllable flying apparatus (7) and the predetermined point on the flying apparatus (7) as well as the last estimated position of the reflection (13) on the mirror surface (5) or from the reflection vector (16),
i) determining a calibration point of the reflector (3) using the determined normal vector (17).

4. The method according to claim 1, 2, or 3, **characterized in that** if the evaluation of the image in step c) reveals that no reflection (13) of the marker (11) is detectable in the image, the controllable flying apparatus is controlled along a predetermined flight pattern while simultaneously capturing images using the camera and evaluating the images until a reflection (13) of the marker (11) is detected in an image, wherein, preferably, this image is then used in step d).

5. The method according to claim 4, **characterized in that** the predetermined flight pattern is generated based on one previous position or more previous positions, or a previous flight path of the controllable flying apparatus (7).

6. The method according to any one of claims 1 to 5, **characterized in that**, after step a) and before step b), the controllable flying apparatus is positioned at a predetermined starting position as the position for step b).

7. The method according to claim 6, **characterized in that** the starting position is located on an estimated optical axis of the reflector (3).

8. The method according to any one of claims 1 to 7, **characterized in that**, in step e), the controllable flying apparatus (7) is controlled by specifying a velocity vector in the direction of the new position.

9. The method according to claim 8, **characterized in that** a center point (5a) of the mirror surface (5) or of the reflector (3) is estimated, wherein the location of the reflection (13) of the marker (11) on the mirror surface (5) relative to the estimated center point (5a) is determined and taken into account when specifying the velocity vector.

10. The method according to any one of claims 1 to 7, **characterized in that**, in step e), the controllable flying apparatus (7) is controlled by specifying a new waypoint at the new position and by specifying a flight speed.

11. The method according to any one of claims 1 to 10, **characterized in that**, if in step c) multiple reflections of the marker (11) on the mirror surface (5) of the reflector (3) or on multiple mirror surfaces (5) of the reflector (3) are determined, in step d) the positions of the multiple reflections of the marker (11) are estimated and the estimated positions are combined, wherein then, for the estimation of the reflection vector (16) or the normal vector (17) of the mirror surface (5) or of the reflector (3), the aggregated position is used as the position of the reflection (13) of the marker (11).

## Revendications

1. Procédé pour la mesure d'une surface réfléchissante (5) d'un réflecteur (3), de préférence d'un réflecteur (3) d'un héliostat (1) d'une centrale solaire à tour, comportant les étapes suivantes :
a) mise à disposition d'un aéronef commandable (7) qui présente une caméra (9) et d'un marqueur (11) fixe avec une position prédéfinie et réfléchi par la surface réfléchissante (5) du réflecteur (3),
b) prise d'une image de la surface réfléchissante (5) du réflecteur (3) à l'aide de la caméra (9) à une position de l'aéronef commandable (7) au-dessus du réflecteur (3),
c) analyse de l'image et détermination d'un reflet (13) du marqueur (11) sur la surface réfléchissante (5) dans l'image,
d) estimation d'une position du reflet (13) du marqueur (11) sur la surface réfléchissante (5), dans lequel, par l'intermédiaire de la position estimée du reflet (13) du marqueur (11) sur la surface réfléchissante (5) et de la position de l'aéronef commandable (7), un vecteur de reflet (16) est estimé, lequel s'étend depuis la position estimée du reflet du marqueur (11) sur la surface réfléchissante (5) jusqu'à la caméra (9), **caractérisé en ce que** le procédé comprend les étapes suivantes :
e) commande de l'aéronef commandable (7) en tenant compte du vecteur de reflet (16) estimé jusqu'à une nouvelle position de l'aéronef commandable (7) qui est plus éloignée de la surface réfléchissante (5) que la position précédente de l'aéronef commandable (7),
f) prise d'une image de la surface réfléchissante (5) du réflecteur (3) à l'aide de la caméra (9) à la nouvelle position de l'aéronef commandable (7),
g) répétition des étapes c) à f) jusqu'à ce qu'un critère d'arrêt soit atteint,
h) détermination du vecteur normal (17) de la surface réfléchissante (5) ou du réflecteur (3) à partir de la position de l'aéronef commandable (7), de la position du marqueur (11) ainsi que de la dernière position estimée du reflet (13) sur la surface réfléchissante (5),
i) détermination d'un point d'étalonnage du réflecteur (3) à l'aide du vecteur normal (17) déterminé.

2. Procédé pour la mesure d'une surface réfléchissante (5) d'un réflecteur (3), de préférence d'un réflecteur (3) d'un héliostat (1) d'une centrale solaire à tour, comportant les étapes suivantes :
a) mise à disposition d'un aéronef commandable (7) qui présente un marqueur et d'une caméra (9) fixe avec une position prédéfinie et orientée vers la surface réfléchissante (5) du réflecteur (3),
b) prise d'une image de la surface réfléchissante (5) du réflecteur (3) à l'aide de la caméra (9), dans lequel l'aéronef commandable (7) est disposé à une position au-dessus du réflecteur (3),
c) analyse de l'image et détermination d'un reflet (13) du marqueur (11) sur la surface réfléchissante (5) dans l'image,
d) estimation d'une position du reflet (13) du marqueur (11) sur la surface réfléchissante (5), dans lequel, par l'intermédiaire de la position estimée du reflet (13) du marqueur (11) sur la surface réfléchissante (5) et de la position de l'aéronef commandable (7), un vecteur de reflet (16) est estimé, lequel s'étend depuis la position estimée du reflet (13) du marqueur (11) sur la surface réfléchissante (5) jusqu'au marqueur (11),
e) commande de l'aéronef commandable (7) en tenant compte du vecteur de reflet (16) estimé jusqu'à une nouvelle position de l'aéronef commandable (7) qui est plus éloignée de la surface réfléchissante (5) que la position précédente de l'aéronef commandable (7),
f) prise d'une image de la surface réfléchissante (5) du réflecteur (3) à l'aide de la caméra (9) lorsque l'aéronef commandable est disposé à la nouvelle position,
g) répétition des étapes c) à f) jusqu'à ce qu'un critère d'arrêt soit atteint,
h) détermination du vecteur normal (17) de la surface réfléchissante (5) ou du réflecteur (3) à partir de la position de l'aéronef commandable (7), de la position de la caméra ainsi que de la dernière position estimée du reflet sur la surface réfléchissante,
i) détermination d'un point d'étalonnage du réflecteur (3) à l'aide du vecteur normal (17) déterminé.

3. Procédé pour la mesure d'une surface réfléchissante (5) d'un réflecteur (3), de préférence d'un réflecteur (3) d'un héliostat (1) d'une centrale solaire à tour, comportant les étapes suivantes :
a) mise à disposition d'un aéronef commandable (7) qui présente une caméra (9) et un marqueur (11), dans lequel le marqueur et la caméra (9) sont respectivement disposés à une position prédéfinie sur l'aéronef commandable,
b) prise d'une image de la surface réfléchissante (5) du réflecteur (3) à l'aide de la caméra (9) à une position de l'aéronef commandable (7) au-dessus du réflecteur (3),
c) analyse de l'image et détermination d'un reflet (13) du marqueur (11) sur la surface réfléchissante (5) dans l'image,
d) estimation d'une position du reflet (13) du marqueur (11) sur la surface réfléchissante (5), dans lequel, par l'intermédiaire de la position du reflet (13) du marqueur (11) sur la surface réfléchissante (5) et de la position de l'aéronef commandable (7), un vecteur de reflet (16) est estimé, lequel s'étend depuis la position estimée du reflet (13) du marqueur (11) sur la surface réfléchissante (5) jusqu'à un point prédéfini sur l'aéronef (7),
e) commande de l'aéronef commandable (7) en tenant compte du vecteur de reflet (16) estimé jusqu'à une nouvelle position de l'aéronef commandable (7) qui est plus éloignée de la surface réfléchissante (5) que la position précédente de l'aéronef commandable (7),
f) prise d'une image de la surface réfléchissante (5) du réflecteur (3) à l'aide de la caméra à la nouvelle position de l'aéronef commandable (7),
g) répétition des étapes c) à f) jusqu'à ce qu'un critère d'arrêt soit atteint,
h) détermination du vecteur normal (17) de la surface réfléchissante (5) ou du réflecteur (3) à partir de la position de l'aéronef commandable (7) et du point prédéfini sur l'aéronef (7) ainsi que de la dernière position estimée du reflet (13) sur la surface réfléchissante (5) ou à partir du vecteur de reflet (16),
i) détermination d'un point d'étalonnage du réflecteur (3) à l'aide du vecteur normal (17) déterminé.

4. Procédé selon la revendication 1, 2 ou 3, **caractérisé en ce que**, lorsque l'analyse de l'image à l'étape c) révèle qu'aucun reflet (13) du marqueur (11) n'est identifiable dans l'image, l'aéronef commandable est commandé selon un schéma de vol prédéfini, avec la prise d'images par la caméra et l'analyse des images simultanément jusqu'à ce qu'un reflet (13) du marqueur (11) soit détecté dans une image, dans lequel, de préférence, ladite image est alors utilisée à l'étape d).

5. Procédé selon la revendication 4, **caractérisé en ce que** le schéma de vol prédéfini est établi à partir d'une position antérieure ou de plusieurs positions antérieures ou d'une trajectoire antérieure de l'aéronef commandable (7).

6. Procédé selon l'une des revendications 1 à 5, **caractérisé en ce qu'**après l'étape a) et avant l'étape b), l'aéronef commandable est positionné à une position de départ prédéterminée en tant que position pour l'étape b).

7. Procédé selon la revendication 6, **caractérisé en ce que** la position de départ est disposée sur un axe optique estimé du réflecteur (3).

8. Procédé selon l'une des revendications 1 à 7, **caractérisé en ce que**, à l'étape e), la commande de l'aéronef commandable (7) est effectuée au moyen de la définition d'un vecteur de vitesse en direction de la nouvelle position.

9. Procédé selon la revendication 8, **caractérisé en ce qu'**un centre (5a) de la surface réfléchissante (5) ou du réflecteur (3) est estimé, dans lequel la position du reflet (13) du marqueur (11) sur la surface réfléchissante (5) par rapport au centre (5a) estimé est déterminée et prise en compte lors de la définition du vecteur de vitesse.

10. Procédé selon l'une des revendications 1 à 7, **caractérisé en ce que**, à l'étape e), la commande de l'aéronef commandable (7) est effectuée par la définition d'un nouveau point de trajet à la nouvelle position et au moyen de la définition d'une vitesse de vol.

11. Procédé selon l'une des revendications 1 à 10, **caractérisé en ce que**, si, à l'étape c), plusieurs reflets du marqueur (11) sur la surface réfléchissante (5) du réflecteur (3) ou sur plusieurs surfaces réfléchissantes (5) du réflecteur (3) sont déterminés dans l'image, à l'étape d), les positions des reflets du marqueur (11) sont estimées et un regroupement des positions estimées est effectué, dans lequel, pour l'estimation du vecteur de reflet (16) ou du vecteur normal (17) de la surface réfléchissante (5) ou du réflecteur (3), la position regroupée est ensuite utilisée en tant que position du reflet (13) du marqueur (11).
